# EUROPEAN PATENT APPLICATION

(11) **EP 3 358 456 A1**
(43) Date of publication of application: **08.08.2018**
(21) Application number: 16897475.6
(22) Date of filing: 05.12.2016
(51) Int. Cl.: G06F 3/06, G06F 12/02, G06F 12/0868, G06F 12/0871

(54) **CONTROL METHOD, STORAGE DEVICE AND SYSTEM FOR DATA READ/WRITE COMMAND IN NVME OVER FABRIC ARCHITECTURE**

(71) Applicant: HUAWEI TECHNOLOGIES CO., LTD., Guangdong 518129 (CN)
(72) Inventor: QIU, Xin, Shenzhen Guangdong 518129 (CN); GISSIN, Victor, Shenzhen Guangdong 518129 (CN); ZHANG, Jinbin, Shenzhen Guangdong 518129 (CN)
(74) Representative: Kreuz, Georg Maria
(86) International application number: PCT/CN2016/108599
(87) International publication number: WO 2018/102967

(57) **Abstract**

Embodiments of the present invention provide a data read/write command control method and system, and a device in an NVMe over Fabric architecture, so as to resolve a prior-art problem that a data read/write command fails to be executed because a large amount of data needs to be transmitted according to the data read/write command and a storage space of a cache unit in a storage device is insufficient. According to the method provided in the embodiments of the present invention, a data processing unit allocates a first storage space from an available storage space of the cache unit according to a length, carried in the data read/write command, of the data that needs to be transmitted, where the first storage space is less than a storage space of the cache unit, and the first length is less than the length of the data that needs to be transmitted; and sequentially migrates the data that needs to be transmitted according to the data read/write command to a storage space corresponding to a destination address. This resolves the problem that a data read/write command cannot be executed because a large amount of data needs to be transmitted according to the data read/write command and a cache unit cannot cache the data that needs to be transmitted.

## Description

### TECHNICAL FIELD

The present invention relates to the field of information technologies, and in particular, to a data read/write command control method and system, and a storage device in a non-volatile memory express NVMe over Fabric, NVMe over Fabric, architecture.

### BACKGROUND

As a controller interface standard, the non-volatile memory express (English: NVMe, non-volatile memory express) standardizes a queue (English: Queue) transmission mechanism between an NVMe device and a host (English: Host) that are connected by using a Peripheral Component Interconnect Express (English: PCIe, Peripheral Component Interconnect Express) bus, optimizes a queue interface, and so on.

After the published NVMe standard in a PCIe architecture gains huge success in the industry, the industry immediately expects to expand the NVMe standard to the data center field. However, due to lack of massive available PCIe networks in the data center field and disadvantages (such as scalability and long-distance connection) of the PCIe protocol, the industry is trying to run an NVMe protocol on networks such as iWrap, remote direct memory access over Converged Ethernet (English: RoCE, remote direct memory access over Converged Ethernet), InfiniBand, Fiber Channel (English: FC, Fiber Channel), and Omni-Path, so that application becomes more flexible and more extensive. In the industry, application of the NVMe protocol running on networks such as iWrap, RoCE, InfiniBand, FC, and Omni-Path is referred to as NVMe over Fabric (NOF for short).

In an NVMe over Fabric architecture, a host indicates a host responsible for initiating data read/write, and a target indicates a target storage device responsible for receiving and executing a command sent by the host. After receiving a write command sent by the host, the target parses content in the write command to obtain a length of data that needs to be transmitted according to the write command, and allocates a corresponding cache space in a network adapter memory of the target, to cache the to-be-transmitted data of the host. After a network adapter of the target allocates the storage space required for caching the data, the host transmits the data to the allocated cache space in the network adapter memory. Then, the data cached in the cache space in the network adapter memory is written into a hard disk of the target. When the host sends a read command, an implementation process is similar. That is, data in a hard disk of the target needs to be cached in a cache space in the network adapter memory of the target, and then the data cached in the cache space is sent to the host.

In a specific service implementation, a large amount of data probably needs to be transmitted according to a write command or a read command sent by a host and exceeds a maximum cache space of a network adapter memory of a target. As a result, the network adapter memory of the target cannot cache the data that needs to be transmitted, and the data read/write command fails to be executed.

### SUMMARY

Embodiments of the present invention provide a data read/write command control method and system, and a device in an NVMe over Fabric architecture, so as to resolve a prior-art problem that a data read/write command fails to be executed because a large amount of data needs to be transmitted according to the data read/write command and a storage space of a cache unit in a storage device is insufficient.

In one aspect, an embodiment of the present invention provides a method for controlling a data read/write command between a control device and a storage device in an NVMe over Fabric architecture. The storage device includes a data processing unit, a cache unit, and a storage unit; data that needs to be read/written by the control device is stored in the storage unit; the data processing unit is configured to receive a data read/write command sent by the control device; the cache unit is configured to cache data that needs to be transmitted according to the data read/write command; and the method includes:
receiving, by the data processing unit, the data read/write command sent by the control device, and allocating a first storage space from an available storage space of the cache unit according to a length, carried in the data read/write command, of the data that needs to be transmitted, where a length of data that can be stored in the first storage space is a first length, the first storage space is less than a storage space of the cache unit, and the first length is less than the length of the data that needs to be transmitted; and
sequentially obtaining, by the data processing unit, data of the first length, caching the data to the first storage space, and sequentially migrating the data cached in the first storage space to a storage space corresponding to a destination address of the data that needs to be transmitted according to the data read/write command.

According to the foregoing method, the data processing unit allocates the first storage space from the available storage space of the cache unit according to the length, carried in the data read/write command, of the data that needs to be transmitted, where the first storage space is less than a storage space of the cache unit, and the first length is less than the length of the data that needs to be transmitted; and sequentially migrates the data that needs to be transmitted according to the data read/write command to the storage space corresponding to the destination address. This resolves a problem that a data read/write command cannot be executed because a large amount of data needs to be transmitted according to the data read/write command and a cache unit cannot cache the data that needs to be transmitted.

Optionally, in the NVMe over Fabric architecture, the control device and the storage device may be connected and perform communication by using a network such as iWarp, RoCE, InfiniBand, FC, or Omni-Path.

The data processing unit in the storage device may be implemented by using a network adapter, an independent FPGA chip, or a central processing unit (English: CPU, central processing unit) in the storage device. The cache unit in the storage device may be implemented by using a network adapter memory, a storage unit in an FPGA chip, a cache unit in a storage device, or a memory of a CPU in the storage device. Alternatively, the cache unit in the storage device may be implemented by using a cache resource pool including at least two of a network adapter memory, a storage unit in an FPGA chip, a cache unit in a storage device, or a memory of a CPU in the storage device.

Optionally, a size of the first storage space is fixed, and the first length is also fixed. In this way, the data processing unit obtains a fixed size or length of data of the first length each time. In this way, the data processing unit allocates the first storage space according to the fixed size each time, and an implementation of the data processing unit is simple and easy.

Optionally, a size of the first storage space may change, and the first length changes correspondingly. That is, there are at least two different sizes of the first storage space allocated by the data processing unit. Correspondingly, there are at least two different sizes or lengths of data of the first length. In this way, the data processing unit allocates the first storage space in different sizes. The size of the first storage space can be flexibly adjusted, so that the cache unit can have a more flexible available storage space to cache data that needs to be transmitted according to various data read/write commands.

Optionally, a location of the first storage space is fixed. Data, of the first length, obtained by the data processing unit each time is cached in a storage space in a fixed location in the cache unit. In this way, the data processing unit caches each time, in the fixed first storage space, data that needs to be transmitted. An implementation is simple and easy.

Optionally, a location of the first storage space may change. That is, there are at least two different locations of the first storage space allocated by the data processing unit. In this way, the data processing unit can flexibly allocate the first storage space, so that the cache unit can have a more flexible available storage space to cache data that needs to be transmitted according to various data read/write commands.

Optionally, both a size and a location of the first storage space may change. In this way, the first storage space can be further flexibly allocated, so that the cache unit can have a more flexible available storage space to cache data that needs to be transmitted according to various data read/write commands.

Optionally, before allocating the first storage space, the data processing unit may determine whether the length or a size of the data that needs to be transmitted according to the data read/write command is greater than or equal to a preset threshold; and allocate the first storage space when the length or the size of the data that needs to be transmitted according to the data read/write command is greater than or equal to the preset threshold. In this way, when a small amount of data needs to be transmitted according to a data read/write command, the data that needs to be transmitted does not need to be transmitted in multiple times. This improves data transmission efficiency and can reduce resource consumption caused by caching, by the data processing unit and the cache unit for multiple times, the data that needs to be transmitted.

In a possible design, the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

In a possible design, the data read/write command includes address information of the data that needs to be transmitted and the length of the data that needs to be transmitted.

In a possible design, the data read/write command is a write command; the data that needs to be transmitted is data that needs to be stored; and the write command includes a source address, on the control device, of the data that needs to be stored, a length of the data that needs to be stored, and a destination address, on the storage unit, of the data that needs to be stored.

Correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command includes:
step S1: obtaining, by the data processing unit from the control device, the data of the first length in the data that needs to be stored;
step S2: caching, by the data processing unit, the obtained data of the first length to the first storage space of the cache unit; and modifying the write command, where the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to the storage space corresponding to the destination address, on the storage unit, of the data that needs to be stored.

Optionally, in step S1, the data processing unit obtains, from the control device by means of remote direct memory access (English: RDMA, remote direct memory access), the data of the first length in the data that needs to be stored.

Optionally, in step S3, the data processing unit may send the modified write command to a controller of a destination hard disk in the storage unit. The destination hard disk is determined by the data processing device according to the destination address, on the storage unit and in the write command, of the data that needs to be stored.

Optionally, the controller of the destination hard disk may write, according to the received modified write command and by means of RDMA or direct memory access (English: DMA, direct memory access), the data that needs to be stored, into the storage space corresponding to the destination address of the destination hard disk.

In a possible design, the data read/write command is a read command; the data that needs to be transmitted is data that needs to be read; and the read command includes a source address, on the storage unit, of the data that needs to be read, a length of the data that needs to be read, and a destination address, on the control device, of the data that needs to be read.

Correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command includes:
step S1: modifying, by the data processing unit, the read command, where the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

Optionally, in step S1, the data processing unit may send the modified read command to a controller of a destination hard disk in the storage unit. The destination hard disk is determined by the data processing device according to the source address, on the storage unit and in the read command, of the data that needs to be read.

Optionally, the controller of the destination hard disk may cache, to the first storage space of the cache unit according to the received modified read command and by means of RDMA or DMA, the data that needs to be read.

Optionally, in step S2, the data processing unit may send, by means of RDMA, the data in the first storage space to the control device.

In a possible design, the data processing unit and the storage unit are connected by using an NVMe over Peripheral Component Interconnect Express PCIe, NVMe over PCIe, architecture.

In a possible design, the data processing unit includes a controller, the controller is configured to control transmission of the data cached in the cache unit from the cache unit to the storage unit, and the controller is a physical controller or a non-volatile storage controller in the NVMe over Fabric architecture.

In another aspect, an embodiment of the present invention provides a storage device. The storage device is a storage device in an NVMe over Fabric architecture; data is transmitted between the storage device and a control device in the NVMe over Fabric architecture; the storage device includes a data processing unit, a cache unit, and a storage unit; data that needs to be read/written by the control device is stored in the storage unit; the data processing unit is configured to receive a data read/write command sent by the control device; the cache unit is configured to cache data that needs to be transmitted according to the data read/write command; the data processing unit includes a processor; and the processor is configured to perform the following steps:
receiving the data read/write command sent by the control device, and allocating a first storage space from an available storage space of the cache unit according to a length, carried in the data read/write command, of the data that needs to be transmitted, where a length of data that can be stored in the first storage space is a first length, the first storage space is less than a storage space of the cache unit, and the first length is less than the length of the data that needs to be transmitted; and
sequentially obtaining data of the first length, caching the data to the first storage space, and sequentially migrating the data cached in the first storage space to a storage space corresponding to a destination address of the data that needs to be transmitted according to the data read/write command.

According to the foregoing storage device, the data processing unit allocates the first storage space from the available storage space of the cache unit according to the length, carried in the data read/write command, of the data that needs to be transmitted, where the first storage space is less than a storage space of the cache unit, and the first length is less than the length of the data that needs to be transmitted; and sequentially migrates the data that needs to be transmitted according to the data read/write command to the storage space corresponding to the destination address. This resolves a problem that a data read/write command cannot be executed because a large amount of data needs to be transmitted according to the data read/write command and a cache unit cannot cache the data that needs to be transmitted.

Optionally, in the NVMe over Fabric architecture, the control device and the storage device may be connected and perform communication by using a network such as iWarp, RoCE, InfiniBand, FC, or Omni-Path.

The data processing unit in the storage device may be implemented by using a network adapter, an independent FPGA chip, or a CPU in the storage device. The cache unit in the storage device may be implemented by using a network adapter memory, a storage unit in an FPGA chip, a cache unit in a storage device, or a memory of a CPU in the storage device. Alternatively, the cache unit in the storage device may be implemented by using a cache resource pool including at least two of a network adapter memory, a storage unit in an FPGA chip, a cache unit in a storage device, or a memory of a CPU in the storage device.

Optionally, a size of the first storage space is fixed, and the first length is also fixed. In this way, the data processing unit obtains a fixed size or length of data of the first length each time. In this way, the data processing unit allocates the first storage space according to the fixed size each time, and an implementation of the data processing unit is simple and easy.

Optionally, a size of the first storage space may change, and the first length changes correspondingly. That is, there are at least two different sizes of the first storage space allocated by the data processing unit. Correspondingly, there are at least two different sizes or lengths of data of the first length. In this way, the data processing unit allocates the first storage space in different sizes. The size of the first storage space can be flexibly adjusted, so that the cache unit can have a more flexible available storage space to cache data that needs to be transmitted according to various data read/write commands.

Optionally, a location of the first storage space is fixed. Data, of the first length, obtained by the data processing unit each time is cached in a storage space in a fixed location in the cache unit. In this way, the data processing unit caches each time, in the fixed first storage space, data that needs to be transmitted. An implementation is simple and easy.

Optionally, a location of the first storage space may change. That is, there are at least two different locations of the first storage space allocated by the data processing unit. In this way, the data processing unit can flexibly allocate the first storage space, so that the cache unit can have a more flexible available storage space to cache data that needs to be transmitted according to various data read/write commands.

Optionally, both a size and a location of the first storage space may change. In this way, the first storage space can be further flexibly allocated, so that the cache unit can have a more flexible available storage space to cache data that needs to be transmitted according to various data read/write commands.

Optionally, before allocating the first storage space, the data processing unit may determine whether the length or a size of the data that needs to be transmitted according to the data read/write command is greater than or equal to a preset threshold; and allocate the first storage space when the length or the size of the data that needs to be transmitted according to the data read/write command is greater than or equal to the preset threshold. In this way, when a small amount of data needs to be transmitted according to a data read/write command, the data that needs to be transmitted does not need to be transmitted in multiple times. This improves data transmission efficiency and can reduce resource consumption caused by caching, by the data processing unit and the cache unit for multiple times, the data that needs to be transmitted.

In a possible design, the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

In a possible design, the data read/write command includes address information of the data that needs to be transmitted and the length of the data that needs to be transmitted.

In a possible design, the data read/write command is a write command; the data that needs to be transmitted is data that needs to be stored; and the write command includes a source address, on the control device, of the data that needs to be stored, a length of the data that needs to be stored, and a destination address, on the storage unit, of the data that needs to be stored.

Correspondingly, the sequentially obtaining data of the first length, caching the data to the first storage space, and sequentially migrating the data cached in the first storage space to a storage space corresponding to a destination address of the data that needs to be transmitted according to the data read/write command includes:
step S1: obtaining, by the data processing unit from the control device, the data of the first length in the data that needs to be stored;
step S2: caching, by the data processing unit, the obtained data of the first length to the first storage space of the cache unit; and modifying the write command, where the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to a storage space corresponding to the destination address, on the storage unit, of the data that needs to be stored.

Optionally, in step S1, the data processing unit obtains, from the control device by means of RDMA, the data of the first length in the data that needs to be stored.

Optionally, in step S3, the data processing unit may send the modified write command to a controller of a destination hard disk in the storage unit. The destination hard disk is determined by the data processing device according to the destination address, on the storage unit and in the write command, of the data that needs to be stored.

Optionally, the controller of the destination hard disk may write, according to the received modified write command and by means of RDMA or DMA, the data that needs to be stored, into the storage space corresponding to the destination address of the destination hard disk.

In a possible design, the data read/write command is a read command; the data that needs to be transmitted is data that needs to be read; and the read command includes a source address, on the storage unit, of the data that needs to be read, a length of the data that needs to be read, and a destination address, on the control device, of the data that needs to be read.

Correspondingly, the sequentially obtaining data of the first length, caching the data to the first storage space, and sequentially migrating the data cached in the first storage space to a storage space corresponding to a destination address of the data that needs to be transmitted according to the data read/write command includes:
step S1: modifying, by the data processing unit, the read command, where the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

Optionally, in step S1, the data processing unit may send the modified read command to a controller of a destination hard disk in the storage unit. The destination hard disk is determined by the data processing device according to the source address, on the storage unit and in the read command, of the data that needs to be read.

Optionally, the controller of the destination hard disk may cache, to the first storage space of the cache unit according to the received modified read command and by means of RDMA or DMA, the data that needs to be read.

Optionally, in step S2, the data processing unit may send, by means of RDMA, the data in the first storage space to the control device.

In a possible design, the data processing unit and the storage unit are connected by using an NVMe over Peripheral Component Interconnect Express PCIe, NVMe over PCIe, architecture.

In a possible design, the data processing unit includes a controller, the controller is configured to control transmission of the data cached in the cache unit from the cache unit to the storage unit, and the controller is a physical controller or a non-volatile storage controller in the NVMe over Fabric architecture.

In still another aspect, an embodiment of the present invention provides a data read/write command control system. The system includes a control device and a storage device in an NVMe over Fabric architecture; the storage device includes a data processing unit, a cache unit, and a storage unit; data that needs to be read/written by the control device is stored in the storage unit; the data processing unit is configured to receive a data read/write command sent by the control device; and the cache unit is configured to cache data that needs to be transmitted according to the data read/write command, where:
the control device is configured to send the data read/write command to the storage device;
the data processing unit is configured to: receive the data read/write command sent by the control device, and allocate a first storage space from an available storage space of the cache unit according to a length, carried in the data read/write command, of the data that needs to be transmitted, where a length of data that can be stored in the first storage space is a first length, the first storage space is less than a storage space of the cache unit, and the first length is less than the length of the data that needs to be transmitted; and
the data processing unit is further configured to: sequentially obtain data of the first length, cache the data to the first storage space, and sequentially migrate the data cached in the first storage space to a storage space corresponding to a destination address of the data that needs to be transmitted according to the data read/write command.

According to the foregoing system, the data processing unit allocates the first storage space from the available storage space of the cache unit according to the length, carried in the data read/write command, of the data that needs to be transmitted, where the first storage space is less than a storage space of the cache unit, and the first length is less than the length of the data that needs to be transmitted; and sequentially migrates the data that needs to be transmitted according to the data read/write command to the storage space corresponding to the destination address. This resolves a problem that a data read/write command cannot be executed because a large amount of data needs to be transmitted according to the data read/write command and a cache unit cannot cache the data that needs to be transmitted.

Optionally, in the NVMe over Fabric architecture, the control device and the storage device may be connected and perform communication by using a network such as iWarp, RoCE, InfiniBand, FC, or Omni-Path.

The data processing unit in the storage device may be implemented by using a network adapter, an independent FPGA chip, or a CPU in the storage device. The cache unit in the storage device may be implemented by using a network adapter memory, a storage unit in an FPGA chip, a cache unit in a storage device, or a memory of a CPU in the storage device. Alternatively, the cache unit in the storage device may be implemented by using a cache resource pool including at least two of a network adapter memory, a storage unit in an FPGA chip, a cache unit in a storage device, or a memory of a CPU in the storage device.

Optionally, a size of the first storage space is fixed, and the first length is also fixed. In this way, the data processing unit obtains a fixed size or length of data of the first length each time. In this way, the data processing unit allocates the first storage space according to the fixed size each time, and an implementation of the data processing unit is simple and easy.

Optionally, a size of the first storage space may change, and the first length changes correspondingly. That is, there are at least two different sizes of the first storage space allocated by the data processing unit. Correspondingly, there are at least two different sizes or lengths of data of the first length. In this way, the data processing unit allocates the first storage space in different sizes. The size of the first storage space can be flexibly adjusted, so that the cache unit can have a more flexible available storage space to cache data that needs to be transmitted according to various data read/write commands.

Optionally, a location of the first storage space is fixed. Data, of the first length, obtained by the data processing unit each time is cached in a storage space in a fixed location in the cache unit. In this way, the data processing unit caches each time, in the fixed first storage space, data that needs to be transmitted. An implementation is simple and easy.

Optionally, a location of the first storage space may change. That is, there are at least two different locations of the first storage space allocated by the data processing unit. In this way, the data processing unit can flexibly allocate the first storage space, so that the cache unit can have a more flexible available storage space to cache data that needs to be transmitted according to various data read/write commands.

Optionally, both a size and a location of the first storage space may change. In this way, the first storage space can be further flexibly allocated, so that the cache unit can have a more flexible available storage space to cache data that needs to be transmitted according to various data read/write commands.

Optionally, before allocating the first storage space, the data processing unit may determine whether the length or a size of the data that needs to be transmitted according to the data read/write command is greater than or equal to a preset threshold; and allocate the first storage space when the length or the size of the data that needs to be transmitted according to the data read/write command is greater than or equal to the preset threshold. In this way, when a small amount of data needs to be transmitted according to a data read/write command, the data that needs to be transmitted does not need to be transmitted in multiple times. This improves data transmission efficiency and can reduce resource consumption caused by caching, by the data processing unit and the cache unit for multiple times, the data that needs to be transmitted.

In a possible design, the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

In a possible design, the data read/write command includes address information of the data that needs to be transmitted and the length of the data that needs to be transmitted.

In a possible design, the data read/write command is a write command; the data that needs to be transmitted is data that needs to be stored; and the write command includes a source address, on the control device, of the data that needs to be stored, a length of the data that needs to be stored, and a destination address, on the storage unit, of the data that needs to be stored.

Correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command includes:
step S1: obtaining, by the data processing unit from the control device, the data of the first length in the data that needs to be stored;
step S2: caching, by the data processing unit, the obtained data of the first length to the first storage space of the cache unit; and modifying the write command, where the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to a storage space corresponding to the destination address, on the storage unit, of the data that needs to be stored.

Optionally, in step S1, the data processing unit obtains, from the control device by means of RDMA, the data of the first length in the data that needs to be stored.

Optionally, in step S3, the data processing unit may send the modified write command to a controller of a destination hard disk in the storage unit. The destination hard disk is determined by the data processing device according to the destination address, on the storage unit and in the write command, of the data that needs to be stored.

Optionally, the controller of the destination hard disk may write, according to the received modified write command and by means of RDMA or DMA, the data that needs to be stored, into the storage space corresponding to the destination address of the destination hard disk.

In a possible design, the data read/write command is a read command; the data that needs to be transmitted is data that needs to be read; and the read command includes a source address, on the storage unit, of the data that needs to be read, a length of the data that needs to be read, and a destination address, on the control device, of the data that needs to be read.

Correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command includes:
step S1: modifying, by the data processing unit, the read command, where the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

Optionally, in step S1, the data processing unit may send the modified read command to a controller of a destination hard disk in the storage unit. The destination hard disk is determined by the data processing device according to the source address, on the storage unit and in the read command, of the data that needs to be read.

Optionally, the controller of the destination hard disk may cache, to the first storage space of the cache unit according to the received modified read command and by means of RDMA or DMA, the data that needs to be read.

Optionally, in step S2, the data processing unit may send, by means of RDMA, the data in the first storage space to the control device.

In a possible design, the data processing unit and the storage unit are connected by using an NVMe over Peripheral Component Interconnect Express PCIe, NVMe over PCIe, architecture.

In a possible design, the data processing unit includes a controller, the controller is configured to control transmission of the data cached in the cache unit from the cache unit to the storage unit, and the controller is a physical controller or a non-volatile storage controller in the NVMe over Fabric architecture.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an implementation of an NVMe over Fabric architecture in the prior art;
FIG. 2 is a schematic structural diagram of an implementation in which a host host and one target are connected and implement data transfer according to an embodiment of the present invention;
FIG. 3 is a schematic flowchart of an implementation of a data read/write command control method in NVMe over Fabric according to an embodiment of the present invention;
FIG. 4 is a schematic flowchart of another implementation of a data read/write command control method in NVMe over Fabric according to an embodiment of the present invention;
FIG. 5 is a schematic flowchart of a method for controlling a data read/write command between a control device and a storage device in an NVMe over Fabric architecture according to an embodiment of the present invention;
FIG. 6 is a schematic structural diagram of a storage device 600 according to an embodiment of the present invention; and
FIG. 7 is a schematic structural diagram of a data read/write command control system according to an embodiment of the present invention.

### DESCRIPTION OF EMBODIMENTS

The following describes the embodiments of the present invention with reference to accompanying drawings.

In addition, the terms "first" and "second" in the embodiments of the present invention are merely intended for a purpose of description, and shall not be understood as an indication or implication of relative importance or implicit indication of a quantity of indicated technical features. Therefore, a feature limited by "first" or "second" may explicitly or implicitly include one or more features.

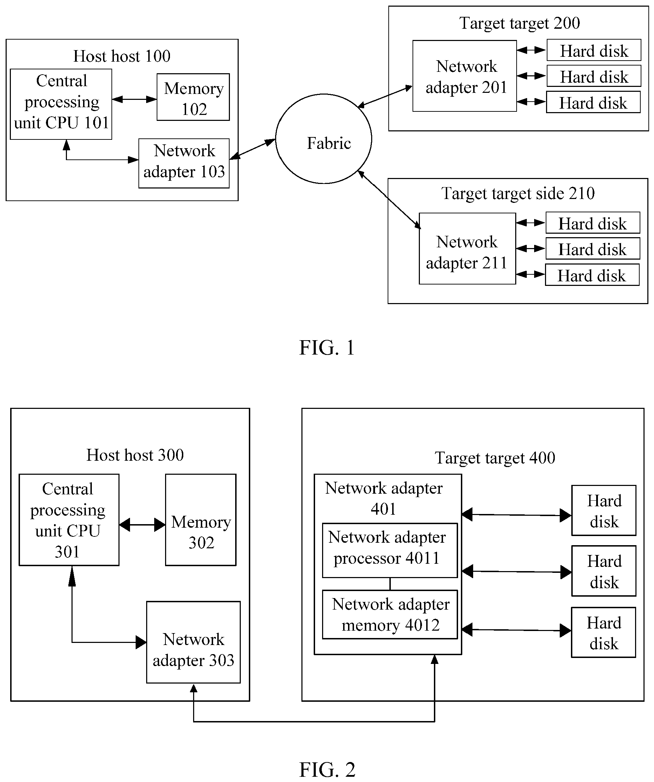

Referring to FIG. 1, FIG. 1 is a schematic diagram of an implementation of an NVMe over Fabric architecture in the prior art. FIG. 1 includes a host 100, a target 200, and a target 300. The host 100 is a host mainly responsible for initiating data read/write, for example, sending a data read/write command. The target 200 and the target 210 are target storage devices, also referred to as NVM subsystems in an NVMe protocol, and are mainly responsible for receiving and executing a data read/write command sent by the host host 100. A specific form of the host host 100 includes but is not limited to a physical server or a virtual machine on a physical server. The physical server may be, for example, a computer device including components such as a CPU, a memory, and a network adapter.

The target 200 may be an independent physical hard disk system. As shown in FIG. 1, the target 200 includes a network adapter 201 and more than one hard disk. The network adapter 201 is separately connected to the more than one hard disk. It should be noted that three hard disks are used as an example in FIG. 1. In a specific implementation, the target 200 may include more than one hard disk. The hard disk in the target 200 may be a storage medium with a storage function, such as a solid state disk (English: SSD, Solid State Disk) or a hard disk drive (English: HDD, Hard Disk Driver). The network adapter 201 has a function of a network interface card and may be a remote network interface card (English: RNIC, Remote Network Interface Card) in NVMe over Fabric. The network adapter 201 and the host 100 use Fabric to perform communication related to a data read/write command or data transmission.

The target 210 has a structure similar to that of the target 200, and includes a network adapter 211 and more than one hard disk. Functions and implementations of components (the network adapter 211, the hard disk, and the like) of the target 210 are similar to functions and implementations of components (the network adapter 201 and the hard disk) of the target 200. In a specific implementation, there may be multiple targets. FIG. 1 merely shows two targets (the target 200 and the target 210) as an example for description.

For example, the host 100 needs to store data into the target 200 in FIG. 1. A process in which the host 100 sends data and the target receives the data includes the following steps.

Step S100: When the host 100 needs to store data into the target 200, the host 100 sends a command by using a write command, where the write command usually carries the data that needs to be stored. If a large amount of data needs to be stored and the host 100 cannot add the data to the write command and send the data (for example, the data that needs to be stored exceeds a maximum amount of data that can be carried in the write command), the host 100 adds an SGL (scatter gather list) to the write command. The SGL includes one field, for example, one entry. The field includes information such as a source address, on the host 100, of the data that needs to be stored, a length of the data that needs to be stored, and a destination address, on the target 200, of the data that needs to be stored. It should be noted that the SGL may include multiple fields, for example, multiple entries. Each entry includes information such as a source address, on the host 100, of the data that needs to be stored, a length of the data that needs to be stored, and a destination address, on the target 200, of the data that needs to be stored. When the data that needs to be stored includes multiple address segments, that is, the data that needs to be stored is not contiguous on the host 100 and exists in multiple address segments, multiple entries are required to record the data in the multiple address segments. This embodiment of the present invention is described by using an example in which the SGL includes one entry.

The following steps are described by using an example in which the data that needs to be stored by the host 100 exceeds an amount of data that can be carried in the write command, and that the SGL in the write command needs to be used to notify the target 200 of address information and a length of the data that needs to be stored.

Step S101: The host 100 sends the write command to the target 200 by using a network adapter 103, where the write command includes the SGL.

Optionally, the data that needs to be stored may be more than one data block. Because a data block has a fixed length, a length of the to-be-written data may be recorded by using a quantity of data blocks.

Step S102: After receiving the write command, the network adapter 201 in the target 200 obtains the length, carried in the write command, of the data that needs to be stored; and allocates a corresponding storage space in a network adapter memory (not shown in FIG. 1) of the network adapter 201, that is, allocates, in the network adapter memory of the network adapter 201, a storage space that is the same as the length, carried in the write command, of the data that needs to be stored, so as to cache the data that needs to be stored and that is sent by the host 100.

Step S103: After allocating the storage space required for caching the data, the network adapter 201 instructs, by using an RDMA command, the network adapter 103 to transmit, by means of RDMA, the data that needs to be stored, that is, instructs the network adapter 103 to read, according to the source address, on the host 100, of the data that needs to be stored, the data that needs to be stored; receives the data that needs to be stored and that is transmitted by the network adapter 103 by using a network; and caches, in the storage space of the network adapter memory, the received data that needs to be stored.

The data that needs to be stored and that is cached in the network adapter memory is migrated to a hard disk in the target 200.

In step S102, the storage space of the network adapter memory may be insufficient. For example, the storage space of the network adapter memory is 1000 K Bytes in size, but data that needs to be transmitted according to the write command sent by the host 100 to the target 200 is 5000 K Bytes. That is, the storage space occupied by the data that needs to be transmitted according to the write command is greater than the maximum storage space of the network adapter memory. In this case, the network adapter 201 does not have a sufficient storage space to cache the data that needs to be stored, and the write command fails to be executed. Alternatively, the storage space of the network adapter memory is 1000 K Bytes in size, but data that needs to be transmitted according to the write command sent by the host 100 to the target 200 is 800 K Bytes. That is, the storage space occupied by the data that needs to be transmitted according to the write command needs to occupy 80% of the storage space of the network adapter memory. If the storage space of the network adapter memory cannot provide 80% of the storage space for caching the data that needs to be transmitted according to the write command because other data is cached, the write command also fails to be executed.

Similarly, when the host 100 sends a data read request to the target 200, the host 100 sends a read command to the network adapter 201. If a storage space occupied by data that needs to be transmitted according to the read command is greater than a storage space of the network adapter memory, the network adapter 201 may also fail to execute the read command. If the storage space of the network adapter memory is expanded, costs increase. If an external general storage device is used as a storage space of the network adapter memory of the target, performance deteriorates because a storage delay increases.

To resolve the foregoing technical problems, the embodiments of the present invention provide a data read/write command control method and system, and a storage device in NVMe over Fabric. The following embodiments are described by using an example in which a host host and one target are connected and implement data transfer. For a case in which the host and multiple targets are connected and implement data transmission, refer to the case in which the host and one target are connected. Details are not described herein.

It should be noted that, in a specific implementation, a target used as a storage device may use a network adapter, an independent field programmable gate array (English: FPGA, field programmable gate array) chip, or a central processing unit (English: CPU, central processing unit) in the target to receive a data read/write command sent by a host used as a control device. In this embodiment of the present invention, the network adapter, the FPGA chip, the CPU, or the like, in the storage device, that receives the data read/write command sent by the control device is collectively referred to as a data processing unit. It may be understood that the data processing unit in this embodiment of the present invention may be a unit or an entity that has a same function as the network adapter, the FPGA chip, or the CPU, provided that the unit or the entity can receive and process the data read/write command sent by the host used as the control device.

When the network adapter is used as the data processing unit in the storage device, a network adapter memory is configured to cache data that needs to be transmitted according to the data read/write command received by the network adapter. When the FPGA is used as the data processing unit in the storage device, a storage unit in the FPGA is configured to cache data that needs to be transmitted according to the data read/write command received by the FPGA. When the CPU in the storage device is used as the data processing unit in the storage device, a memory of the CPU is configured to cache data that needs to be transmitted according to the data read/write command received by the CPU, that is, the memory of the CPU is shared to cache the data. In addition, a cache unit in the target, such as a cache device using a DDR as a cache, may also be used as a cache of the network adapter, the FPGA, or the CPU. In this embodiment of the present invention, the network adapter memory, the storage unit in the FPGA chip, the memory of the CPU, or the cache unit in the target is collectively referred to as a cache unit. It may be understood that the cache unit in this embodiment of the present invention may be another storage medium that has a same function as the network adapter memory, the storage unit in the FPGA chip, or the memory of the CPU, provided that the another storage medium can be configured to cache the data that needs to be transmitted according to the data read/write command sent by the host used as the control device. In addition, the network adapter memory, the storage unit in the FPGA chip, the memory of the CPU, or the cache unit in the target may also form a cache resource pool. In a specific implementation, one or more of the network adapter, the FPGA chip, or the CPU may receive the data read/write command sent by the host and cache, in the cache resource pool, the data that needs to be transmitted.

The embodiment of the present invention is described below by using an example in which the network adapter is used as the data processing unit in the storage device, the network adapter memory is used as the cache unit in the storage device, the target is used as the storage device, and the host is used as the control device. It may be understood that, for an implementation in which the FPGA or the CPU is used as the data processing unit, reference may be made to an implementation in which the network adapter is used as the data processing unit. For an implementation in which the storage unit in the FPGA chip, the cache unit in the target, or the memory of the CPU is used as the cache unit or an implementation of a resource pool including the storage unit in the FPGA chip, the cache unit in the target, or the memory of the CPU, refer to an implementation in which the network adapter memory is used as the cache unit. Details are not described herein.

FIG. 2 is a schematic structural diagram of an implementation in which a host host and one target are connected and implement data transfer according to an embodiment of the present invention. As shown in FIG. 2, a host 300 and a target 400 are connected over Fabric. Specifically, the host 300 and the target 400 may be connected and perform communication by using a network such as iWrap, RoCE, InfiniBand, FC, or Omni-Path.

The host 300 includes hardware components such as a CPU 301, a memory 302, and a network adapter 303. The target 400 includes a network adapter 401 and more than one hard disk. The host 300 is a host mainly responsible for initiating data read/write, for example, sending a data read/write command. A specific form of the host host 300 includes but is not limited to a physical server or a virtual machine on a physical server. The physical server may be, for example, a computer device including components such as a CPU, a memory, and a network adapter. It should be noted that, if the host host 300 is a virtual machine on a physical server, the hardware components, such as the CPU 301, the memory 302, and the network adapter 303, included in the host 300 refer to resources, such as a CPU, a memory, and a network adapter, that are allocated by the physical server to the virtual machine. Similarly, the network adapter 401 in the target 400 may be a virtual network adapter. The virtual network adapter is a network adapter resource allocated by a physical network adapter in the target 400 to the virtual network adapter.

The target 400 is a target storage device, also referred to as an NVM subsystem in an NVMe over Fabric architecture, and is mainly responsible for receiving and executing a read/write command sent by the host host 300. The hard disk in the target 400 may be a medium with a storage function, such as an SSD or an HDD. Three hard disks are used as an example in FIG. 2. The network adapter 401 includes a network adapter processor 4011 and a network adapter memory 4012. The network adapter 401 has a function of a network interface card and may be an RNIC in NVMe over Fabric. The network adapter 401 and the host 300 use a network in the NVMe over Fabric architecture to perform communication related to a data read/write command or data transmission.

In FIG. 2, for example, the network adapter memory 4012 is located in the network adapter 401, that is, the network adapter 401 includes the network adapter memory 4012. In a specific implementation, alternatively, the network adapter memory 4012 may be located outside the network adapter 401, that is, the network adapter memory of the target 400 may be a storage medium independent of the network adapter 401. In this embodiment of the present invention, the storage medium independent of the network adapter 401 may be a storage medium such as a double data rate (English: DDR, double data rate) storage medium. In another alternative implementation, the network adapter memory 4012 of the network adapter 401 may be a memory resource pool including memory resources of multiple network adapters in the target 400. A specific presentation form of the network adapter memory is not limited in this embodiment of the present invention.

To avoid a prior-art problem that a data read/write command cannot be executed because a storage space of the network adapter memory of the network adapter 401 is insufficient, a data read/write command control method in NVMe over Fabric according to the embodiments of the present invention is described below in detail by using an example in which the host 300 sends a data write command to the target 400 and by using an example in which the host 300 sends a data read command to the target 400.

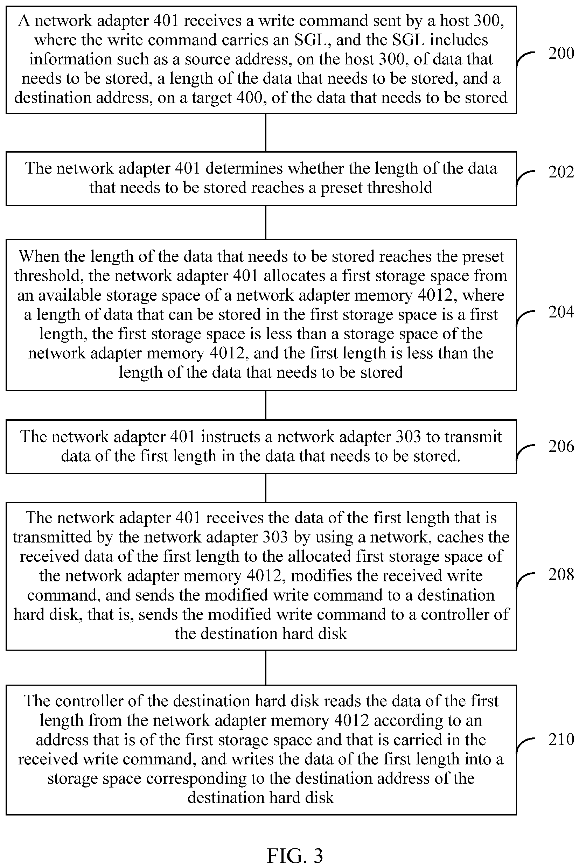

When the host 300 sends a data write command to the target 400, as shown in FIG. 3, a data read/write command control method in NVMe over Fabric according to an embodiment of the present invention includes the following steps.

Step 200: The network adapter 401 receives the write command sent by the host 300, where the write command carries an SGL, and the SGL includes information such as a source address, on the host 300, of the data that needs to be stored, a length of the data that needs to be stored, and a destination address, on the target 400, of the data that needs to be stored.

Specifically, when the host 300 needs to write, into the target 400, the data that needs to be stored, the host 300 sends the write command to the target 400. That is, the host 300 sends the write command to the target 400 by using a network such as iWrap, RoCE, InfiniBand, FC, or Omni-Path.

Step 202: The network adapter 401 determines whether the length of the data that needs to be stored reaches a preset threshold.

The preset threshold may be set differently according to a specific service implementation scenario. For example, when a total storage space of the network adapter memory 4012 is 1 GB, the preset threshold is 200 MB; or when a total storage space of the network adapter memory 4012 is 500 MB, the preset threshold is 150 MB. In a specific implementation, different preset thresholds may be set according to the total storage space of the network adapter memory 4012 and requirements for different services.

Step 204: When the length of the data that needs to be stored reaches the preset threshold, the network adapter 401 allocates a first storage space from an available storage space of the network adapter memory 4012, where a length of data that can be stored in the first storage space is a first length, the first storage space is less than a storage space of the network adapter memory 4012, and the first length is less than the length of the data that needs to be stored.

The first storage space may be less than or equal to an available storage space obtained when the data processing unit receives a data read/write command. For example, when the network adapter 401 receives the write command, if the available storage space of the network adapter 4012 is 100 KB, a size of the first storage space may be 80 KB or 100 KB; or when the network adapter 401 receives the write command, if the available storage space of the network adapter 4012 can store 100 data blocks, a size of the first storage space may be 80 data blocks or 100 data blocks.

Alternatively, the size of the first storage space may be a preset threshold. For example, it is preset that a threshold of the first storage space is 100 data blocks. When the network adapter 401 receives the write command, if the available storage space of the network adapter 4012 can store 120 data blocks and the data that needs to be stored according to the write command is 500 data blocks, the network adapter allocates a storage space of 100 data blocks as the first storage space. When the network adapter 401 receives the write command, if the available storage space of the network adapter 4012 can store 80 data blocks, the network adapter waits a preset time, such as 3 minutes, and determines again, after the preset time elapses, whether an available storage space of the network adapter 4012 is greater than or equal to the preset threshold. If the available storage space of the network adapter 4012 is greater than or equal to the preset threshold at this time, for example, the available storage space of the network adapter 4012 is 150 data blocks, the network adapter allocates a storage space of 100 data blocks as the first storage space. If the available storage space of the network adapter 4012 is less than the preset threshold at this time, for example, the available storage space of the network adapter 4012 is 90 data blocks, the network adapter continues to wait the preset time and then determines whether an available storage space of the network adapter 4012 is greater than or equal to the preset threshold.

In a specific implementation, the size of the first storage space may be set in a register of the network adapter 401. The size of the first storage space may be represented by a length (for example, 20 MB) of data that can be stored, or may be represented by a quantity (for example, 20 data blocks) of data blocks that can be stored. When the size of the first storage space is represented by a length of data that can be stored, the first length is a value of the length of the data that can be stored, for example, 20 MB. When the size of the first storage space is represented by a quantity of data blocks that can be stored, the first length is a value of the data blocks that can be stored, for example, 20 data blocks.

Certainly, in a specific implementation, the network adapter 401 may not determine whether the length of the data that needs to be stored reaches the preset threshold. That is, step 202 is an optional implementation step. When the step of determining whether the length of the data that needs to be stored reaches the preset threshold is not performed, the network adapter 401 may directly allocate the first storage space from the available storage space of the network adapter memory 4012. In this case, the first storage space allocated by the network adapter 401 may be that the first storage space is less than or equal to the available storage space obtained when the data processing unit receives the data read/write command, or may be a first storage space of a size of the preset threshold.

It may be understood that the first storage space allocated by the network adapter 401 from the available storage space of the network adapter memory 4012 may be a storage space with a fixed location, or may be a storage space with a changing location.

When a location of the first storage space is fixed, the first storage space is a segment of address space obtained, by division, from the available storage space of the network adapter memory 4012. In a process of transmitting the data that needs to be stored according to the write command, the segment of address space is not used to cache data that needs to be transmitted according to another data read/write command. Using an address segment 0001 to 0100 as an example, from a start address 0001 to an end address 0100, a storage space corresponding to the address segment is the first storage space. Specifically, after allocating the first storage space, the network adapter 401 may set an identifier for the address segment in which the first storage space is located. The identifier is used to indicate that the address segment has been occupied, and the network adapter 401 no longer caches, in the storage space corresponding to the address segment, data that needs to be transmitted according to another data read/write command. In this way, the first storage space is used to cache only the data that needs to be stored according to the write command. After all the data that needs to be stored according to the write command is written into a storage space corresponding to the destination address on the target 400, the network adapter 401 cancels the identifier that was set, and the first storage space may be used to cache data that needs to be transmitted according to another data read/write command.

When a location of the first storage space is not fixed, in a process of transmitting the data that needs to be stored according to the write command, a different address segment is allocated to the first storage space each time. For example, an address segment allocated to the first storage space for a first time is 0001 to 0100, that is, a storage space corresponding to the address segment from a start address 0001 to an end address 0100 is an address space in which the first storage space is located; an address segment allocated to the first storage space for a second time is 0301 to 0400, that is, a storage space corresponding to the address segment from a start address 0301 to an end address 0400 is an address space in which the first storage space is located. In this way, the network adapter 401 may flexibly allocate the first storage space according to the available storage space of the network adapter memory 4012.

The location of the allocated first storage space in the network adapter memory 4012 is not limited in this embodiment of the present invention. The fixed or changing location of the first storage space is an implementation of allocating the first storage space in this embodiment of the present invention.

Step 206: The network adapter 401 instructs the network adapter 303 to transmit data of the first length in the data that needs to be stored.

Specifically, the network adapter 401 may instruct, by means of RDMA, the network adapter 303 to read the data of the first length from the source address, of the data that needs to be stored, in the SGL carried in the write command.

Specifically, the source address, of the data that needs to be stored, in the SGL carried in the write command is a start address. When the data of the first length is being read, reading of the data of the first length starts from the source address of the data that needs to be stored.

Step 208: The network adapter 401 receives the data of the first length that is transmitted by the network adapter 303 by using a network, caches the received data of the first length to the allocated first storage space of the network adapter memory 4012, modifies the received write command, and sends the modified write command to a destination hard disk, that is, sends the modified write command to a controller of the destination hard disk.

Specifically, the network adapter 401 may receive the data of the first length that is transmitted by the network adapter 303 by using the network, and cache the received data of the first length to the allocated first storage space of the network adapter memory 4012. Then, the network adapter 401 modifies the received write command. The source address that is on the host 300 and in the SGL carried in the write command and that is of the data that needs to be stored is modified to an address of the first storage space in the network adapter memory 4012, and the length that is in the SGL carried in the write command and that is of the data that needs to be stored is modified to the first length. The network adapter 401 sends the modified write command to the destination hard disk, that is, sends the modified write command to the controller of the destination hard disk. The SGL carried in the write command sent by the network adapter 401 to the controller of the destination hard disk includes information such as the address of the first storage space in the network adapter memory 4012, the first length, and the destination address, on the target 400, of the data that needs to be stored.

The destination hard disk is determined by the network adapter 401 according to the destination address, on the target 400 and in the write command, of the data that needs to be stored. The network adapter 401 can determine, according to the destination address, a hard disk that is in the target 400 and in which the data that needs to be stored is located, and determine that the hard disk in which the destination address is located is the destination hard disk, where the destination address is on the target 400 and is of the data that needs to be stored. In the target 400, each hard disk is corresponding to an address segment. The network adapter 401 determines, according to the destination address in the SGL in the write command, an address segment in which the destination address is located, where the destination address is on the target 400 and is of the data that needs to be stored. A hard disk corresponding to the address segment is the destination hard disk.

Step 210: The controller of the destination hard disk reads the data of the first length from the network adapter memory 4012 according to an address that is of the first storage space and that is carried in the received write command, and writes the data of the first length into a storage space corresponding to the destination address of the destination hard disk.

Optionally, the controller of the destination hard disk may write, by means of RDMA or direct memory access (English: DMA, direct memory access), the data that needs to be stored, into the storage space corresponding to the destination address of the destination hard disk. In this embodiment of the present invention, the network adapter 401 and the hard disk in the target 400 are connected based on an NVMe over PCIe architecture. Therefore, the controller of the destination hard disk in the target 400 and the network adapter 401 may be connected and perform communication by means of NVMe over PCIe. That is, the controller of the destination hard disk may write, from the network adapter memory 4012 into the destination hard disk and based on a manner specified by an NVMe over PCIe protocol, the data that needs to be stored.

That the network adapter 401 modifies the write command and sends the modified write command to the controller of the destination hard disk may be implemented by a control module in the network adapter 401. The control module may be implemented by a physical chip (for example, a processor such as ARM, X86, or Power PC), or may be implemented by a software module running on a physical chip, or may be one or more virtual controllers created on a physical chip by using a virtual machine technology. The control module may be a physical controller or an NVM controller in NVMe over Fabric.

Step 206 to step 210 are cyclically performed till all the data that needs to be stored is written into the storage space corresponding to the destination address, on the target 400, of the data that needs to be stored.

The following describes a process of cyclically performing step 206 to step 210 by using an example in which the data that needs to be stored is 202 data blocks and the first length is 10 data blocks. When step 206 to step 210 are performed for the first time, the data of the first length that is cached in the network adapter memory 4012 is a first to a tenth data blocks starting from the source address, on the host 300, of the data that needs to be stored. The data of the first length is written into a storage space corresponding to 10 data blocks starting from a start address of the destination address, on the target 400, of the data that needs to be stored. When step 206 to step 210 are performed for the second time, the data of the first length that is cached in the network adapter memory 4012 is an eleventh to a twentieth data blocks starting from the source address, on the host 300, of the data that needs to be stored. The data of the first length is written into a storage space corresponding to 10 data blocks starting from an address space obtained by adding 10 data blocks to the start address of the destination address, on the target 400, of the data that needs to be stored, and so on, till all the data that needs to be stored is written into the storage space corresponding to the destination address, on the target 400, of the data that needs to be stored.

It should be noted that, when step 206 to step 210 are performed for the last time, because remaining data is two data blocks, the length, of the data that needs to be stored, included in the SGL carried in the write command sent by the network adapter 401 to the controller of the destination hard disk is a length of the remaining data, that is, a length of the two data blocks. That is, the SGL carried in the write command sent by the network adapter 401 to the controller of the destination hard disk includes the address of the first storage space in the network adapter memory 4012, the length of the two data blocks, and information of a start address obtained by adding a length of200 data blocks to the start address of the destination address, on the target 400, of the data that needs to be stored.

When the data that needs to be stored is represented by a data length, for example, the data that needs to be stored is 200 KB, a source address of the data that needs to be stored may be represented by specific address information, such as 00001 to 01000. An implementation of cyclically performing step 206 to step 210 is similar to the implementation in which the data that needs to be stored is represented by data blocks. Details are not described herein.

In the process of cyclically performing step 206 to step 210, the size of the first storage space is fixed, and transmission is performed according to an actual data length only because a data length is less than the first length when step 206 to step 210 are performed for the last time. It may be understood that the size of the first storage space may change when step 206 to step 210 are cyclically performed. That is, according to the size of the available storage space of the network adapter memory 4012, a size of the first storage space allocated each time step 206 to step 210 are performed may be different. For example, a size of the first storage space allocated for an N^{th} time is 100 data blocks; for an (N + 2)^{th} time, the available storage space of the network adapter memory 4012 increases, and a size of the allocated first storage space is 150 data blocks; for an (N + 6)^{th} time, the available storage space of the network adapter memory 4012 decreases, and a size of the allocated first storage space is 50 data blocks, and so on. N is a positive integer greater than or equal to 1.

In addition, in the process of cyclically performing step 206 to step 210, if the size of the first storage space allocated each time is different, when the network adapter 401 modifies the write command, the length of the written data that needs to be stored also changes accordingly. An implementation process is similar to the foregoing described implementation process. Details are not described herein.

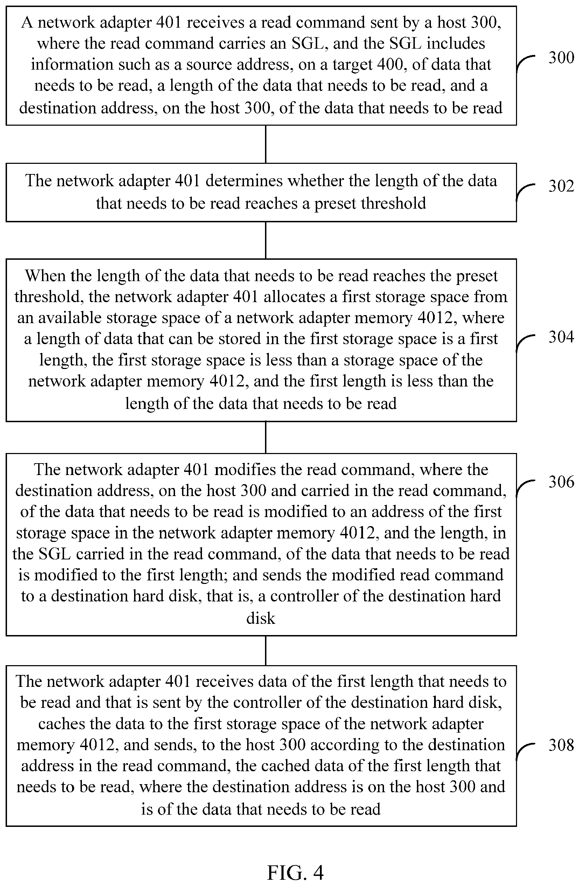

When the host 300 sends a data read command to the target 400, as shown in FIG. 4, a data read/write command control method in NVMe over Fabric according to an embodiment of the present invention includes the following steps.

Step 300: The network adapter 401 receives the read command sent by the host 300, where the read command carries an SGL, and the SGL includes information such as a source address, on the target 400, of the data that needs to be read, a length of the data that needs to be read, and a destination address, on the host 300, of the data that needs to be read.

Specifically, when the host 300 needs to read the data from the target 400, the host 300 sends the read command to the target 400. That is, the host 300 sends the read command to the target 400 by using a network such as iWrap, RoCE, InfiniBand, FC, or Omni-Path.

Step 302: The network adapter 401 determines whether the length of the data that needs to be read reaches a preset threshold.

The preset threshold may be set differently according to a specific service implementation scenario. For example, when a total storage space of the network adapter memory 4012 is 10 GB, the preset threshold is 2 GB; or when a total storage space of the network adapter memory 4012 is 500 MB, the preset threshold is 450 MB. In a specific implementation, different preset thresholds may be set according to the total storage space of the network adapter memory 4012 and requirements for different services.

Step 304: When the length of the data that needs to be read reaches the preset threshold, the network adapter 401 allocates a first storage space from an available storage space of the network adapter memory 4012, where a length of data that can be stored in the first storage space is a first length, the first storage space is less than a storage space of the network adapter memory 4012, and the first length is less than the length of the data that needs to be read.

The first storage space may be less than or equal to an available storage space obtained when the data processing unit receives a data read/write command. For example, when the network adapter 401 receives the read command, if the available storage space of the network adapter 4012 is 100 KB, a size of the first storage space may be 80 KB or 100 KB; or when the network adapter 401 receives the read command, if the available storage space of the network adapter 4012 can store 100 data blocks, a size of the first storage space may be 80 data blocks or 100 data blocks.

Alternatively, the size of the first storage space may be a preset threshold. For example, it is preset that a threshold of the first storage space is 100 data blocks. When the network adapter 401 receives the read command, if the available storage space of the network adapter 4012 can store 120 data blocks and the data that needs to be stored according to the read command is 600 data blocks, the network adapter allocates a storage space of 100 data blocks as the first storage space. When the network adapter 401 receives the read command, if the available storage space of the network adapter 4012 can store 80 data blocks, the network adapter waits a preset time, such as 3 minutes, and determines again, after the preset time elapses, whether an available storage space of the network adapter 4012 is greater than or equal to the preset threshold. If the available storage space of the network adapter 4012 is greater than or equal to the preset threshold at this time, for example, the available storage space of the network adapter 4012 is 150 data blocks, the network adapter allocates a storage space of 100 data blocks as the first storage space. If the available storage space of the network adapter 4012 is less than the preset threshold at this time, for example, the available storage space of the network adapter 4012 is 90 data blocks, the network adapter continues to wait the preset time and then determines whether an available storage space of the network adapter 4012 is greater than or equal to the preset threshold.

In a specific implementation, the size of the first storage space may be set in a register of the network adapter 401. The size of the first storage space may be represented by a length (for example, 20 MB) of data that can be stored, or may be represented by a quantity (for example, 20 data blocks) of data blocks that can be stored. When the size of the first storage space is represented by a length of data that can be read, the first length is a value of the length of the data that can be read, for example, 20 MB. When the size of the first storage space is represented by a quantity of data blocks that can be read, the first length is a value of the data blocks that can be read, for example, 20 data blocks.

Certainly, in a specific implementation, the network adapter 401 may not determine whether the length of the data that needs to be stored reaches the preset threshold. That is, step 302 is an optional implementation step. When the step of determining whether the length of the data that needs to be stored reaches the preset threshold is not performed, the network adapter 401 may directly allocate the first storage space from the available storage space of the network adapter memory 4012. In this case, the first storage space allocated by the network adapter 401 may be that the first storage space is less than or equal to the available storage space obtained when the data processing unit receives the data read/write command, or may be a first storage space of a size of the preset threshold.

Similar to the implementation process of the write command, when the first storage space allocated by the network adapter 401 from the available storage space of the network adapter memory 4012 is used to store the data that needs to be read according to the read command, the allocated first storage space may be a storage space with a fixed location, or may be a storage space with a changing location.

Step 306: The network adapter 401 modifies the read command, where the destination address, on the host 300 and carried in the read command, of the data that needs to be read is modified to an address of the first storage space in the network adapter memory 4012, and the length, in the SGL carried in the read command, of the data that needs to be read is modified to the first length; and sends the modified read command to a destination hard disk, that is, a controller of the destination hard disk.

That is, the SGL carried in the read command sent by the network adapter 401 to the controller of the destination hard disk includes information such as the source address, on the target 400, of the data that needs to be read, the first length, and the address of the first storage space in the network adapter memory 4012. The controller of the destination hard disk caches, to the first storage space of the network adapter memory 4012 according to the received modified read command, data of the first length that needs to be read. Optionally, the controller of the destination hard disk migrates, by means of RDMA or direct memory access (English: DMA, direct memory access), the data that needs to be read, to a storage space that is in the network adapter memory 4012 and that is corresponding to the first command queue.

Optionally, the network adapter 401 and the hard disk in the target 400 are connected based on an NVMe over PCIe architecture. The network adapter 401 and the controller of the destination hard disk in the target 400 are connected and perform communication in the NVMe over PCIe architecture, to cache the data that needs to be read in the storage space that is in the network adapter memory 4012 and that is corresponding to the first command queue.

The destination hard disk is determined by the network adapter 401 according to the source address, on the target 400 and in the read command, of the data that needs to be read. The network adapter 401 can determine, according to the source address, a hard disk that is in the target 400 and in which the data that needs to be read is located, and determine that the hard disk in which the source address is located is the destination hard disk, where the source address is on the target 400 and is of the data that needs to be read.

Specifically, in the foregoing process of implementing data caching and migration in the network adapter memory 4012, the write command or the read command may be modified by a control module in the network adapter 401. The control module may be implemented by a physical chip (for example, a processor such as ARM, X86, or Power PC), or may be implemented by a software module running on a physical chip, or may be one or more virtual controllers created on a physical chip by using a virtual machine technology. The control module may be a physical controller or an NVM controller in NVMe over Fabric.

Step 308: The network adapter 401 receives data of the first length that needs to be read and that is sent by the controller of the destination hard disk, caches the data to the first storage space of the network adapter memory 4012, and sends, to the host 300 according to the destination address in the read command, the cached data of the first length that needs to be read, where the destination address is on the host 300 and is of the data that needs to be read.

Optionally, the network adapter 401 may send, to the host 300 by means of RDMA, the cached data of the first length that needs to be read.

Step 306 to step 308 are cyclically performed till all the data that needs to be read is written into a storage space corresponding to the destination address, on the host 300, of the data that needs to be read.

The following describes a process of cyclically performing step 306 to step 308 by using an example in which the data that needs to be read is 202 data blocks and the first length is 10 data blocks. When step 306 to step 308 are performed for the first time, the data of the first length that is cached in the network adapter memory 4012 is a first to a tenth data blocks starting from the source address, on the target 400, of the data that needs to be read. The data of the first length is written into a storage space corresponding to 10 data blocks starting from a start address of the destination address, on the host 300, of the data that needs to be read. When step 306 to step 308 are performed for the second time, the data of the first length that is cached in the network adapter memory 4012 is an eleventh to a twentieth data blocks starting from the source address, on the target 400, of the data that needs to be read. The data of the first length is written into a storage space corresponding to 10 data blocks starting from an address space obtained by adding 10 data blocks to the start address of the destination address, on the host 300, of the data that needs to be read, and so on, till all the data that needs to be read is written into the storage space corresponding to the destination address, on the host 300, of the data that needs to be read.

It should be noted that, when step 306 to step 308 are performed for the last time, because remaining data is two data blocks, the length, of the data that needs to be stored, included in the SGL carried in the read command sent by the network adapter 401 to the controller of the destination hard disk is a length of the remaining data, that is, a length of the two data blocks. The SGL carried in the read command sent by the network adapter 401 to the controller of the destination hard disk includes the address of the first storage space in the network adapter memory 4012, the length of the two data blocks, and information of a start address obtained by adding a length of 200 data blocks to the start address of the destination address, on the target 400, of the data that needs to be read.

When the data that needs to be read is represented by a data length, for example, the data that needs to be read is 200 KB, a source address of the data that needs to be read may be represented by specific address information, such as 00001 to 01000. An implementation of cyclically performing step 306 to step 308 is similar to the implementation in which the data that needs to be read is represented by data blocks. Details are not described herein.

In the process of cyclically performing step 306 to step 308, the size of the first storage space is fixed, and transmission is performed according to an actual data length only because a data length is less than the first length when step 306 to step 308 are performed for the last time. It may be understood that the size of the first storage space may change when step 306 to step 308 are performed each time. That is, according to the size of the available storage space of the network adapter memory 4012, a size of the first storage space allocated each time step 306 to step 308 are performed may be different. For example, a size of the first storage space allocated for an N^{th} time is 100 data blocks; for an (N + 2)^{th} time, the available storage space of the network adapter memory 4012 increases, and a size of the allocated first storage space is 150 data blocks; for an (N + 6)^{th} time, the available storage space of the network adapter memory 4012 decreases, and a size of the allocated first storage space is 50 data blocks, and so on. N is a positive integer greater than or equal to 1.

In addition, in the process of cyclically performing step 306 to step 308, if the size of the first storage space allocated each time is different, when the network adapter 401 modifies the read command, the length of the written data that needs to be stored also changes accordingly. An implementation process is similar to the foregoing described implementation process. Details are not described herein.

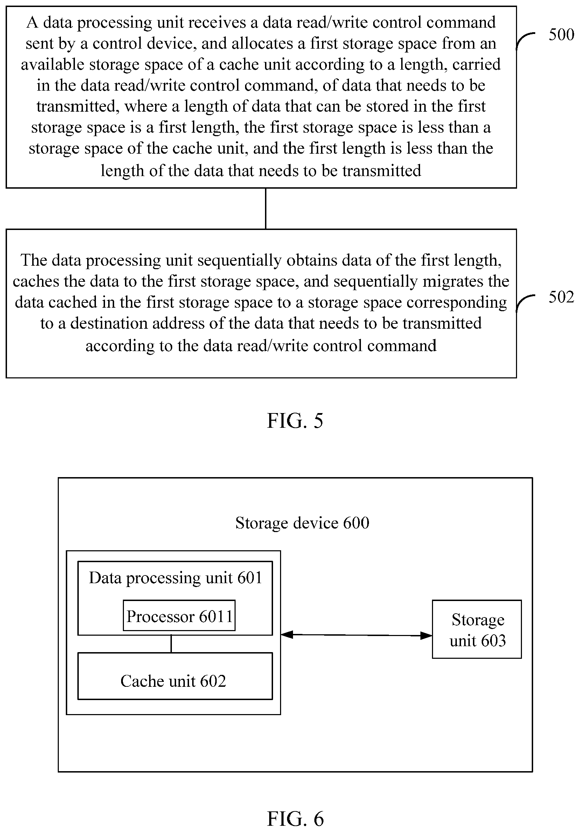

FIG. 5 is a schematic flowchart of a method for controlling a data read/write command between a control device and a storage device in an NVMe over Fabric architecture according to an embodiment of the present invention. The storage device includes a data processing unit, a cache unit, and a storage unit. Data that needs to be read/written by the control device is stored in the storage unit. The data processing unit is configured to receive a data read/write command sent by the control device. The cache unit is configured to cache data that needs to be transmitted according to the data read/write command. The method includes the following steps.

Step 500: The data processing unit receives the data read/write command sent by the control device, and allocates a first storage space from an available storage space of the cache unit according to a length, carried in the data read/write command, of the data that needs to be transmitted, where a length of data that can be stored in the first storage space is a first length, the first storage space is less than a storage space of the cache unit, and the first length is less than the length of the data that needs to be transmitted.

Step 502: The data processing unit sequentially obtains data of the first length, caches the data to the first storage space, and sequentially migrates the data cached in the first storage space to a storage space corresponding to a destination address of the data that needs to be transmitted according to the data read/write command.

According to the foregoing method, because the first storage space allocated by the data processing unit from the available storage space of the cache unit is less than a storage space of the cache unit, and the first length is less than the length of the data that needs to be transmitted, the data of the first length may be sequentially migrated to the storage space corresponding to the destination address of the data that needs to be transmitted according to the data read/write command, so as to resolve a problem that a data read/write command fails to be executed because data that needs to be transmitted according to the data read/write command is greater than the storage space of the cache unit in the storage device.

The implementation of the method shown in FIG. 5 in this embodiment of the present invention may also be implemented with reference to the implementations shown in FIG. 2, FIG. 3, and FIG. 4. Details are not described herein. For example, the data processing unit may be implemented with reference to the manner of the network adapter 401, the cache unit may be implemented with reference to the implementation of the network adapter memory 4012, the storage unit may be implemented with reference to the implementation of the hard disk in FIG. 2, and the control device may be implemented with reference to the implementation of the host 300.

FIG. 6 is a schematic structural diagram of a storage device 600 according to an embodiment of the present invention. The storage device 600 is a storage device in an NVMe over Fabric architecture. Data is transmitted between the storage device 600 and a control device in the NVMe over Fabric architecture. The storage device 600 includes a data processing unit 601, a cache unit 602, and a storage unit 603. Data that needs to be read/written by the control device is stored in the storage unit 603. The data processing unit 601 is configured to receive a data read/write command sent by the control device. The cache unit 602 is configured to cache data that needs to be transmitted according to the data read/write command. The data processing unit 601 includes a processor. The processor is configured to perform the following steps:
receiving the data read/write command sent by the control device, and allocating a first storage space from an available storage space of the cache unit 602 according to a length, carried in the data read/write command, of the data that needs to be transmitted, where a length of data that can be stored in the first storage space is a first length, the first storage space is less than a storage space of the cache unit 602, and the first length is less than the length of the data that needs to be transmitted; and
sequentially obtaining data of the first length, caching the data to the first storage space, and sequentially migrating the data cached in the first storage space to a storage space corresponding to a destination address of the data that needs to be transmitted according to the data read/write command.

According to an implementation provided by the storage device 600, because the first storage space allocated by the data processing unit 601 from the available storage space of the cache unit 602 is less than a storage space of the cache unit 602, and the first length is less than the length of the data that needs to be transmitted, the data of the first length may be sequentially migrated to the storage space corresponding to the destination address of the data that needs to be transmitted according to the data read/write command, so as to resolve a problem that a data read/write command fails to be executed because data that needs to be transmitted according to the data read/write command is greater than the storage space of the cache unit 602 in the storage device.

The implementation of the storage device 600 shown in FIG. 6 in this embodiment of the present invention may also be implemented with reference to the implementations shown in FIG. 2, FIG. 3, and FIG. 4. Details are not described herein. For example, the data processing unit 601 may be implemented with reference to the manner of the network adapter 401, the cache unit 602 may be implemented with reference to the implementation of the network adapter memory 4012, the storage unit 603 may be implemented with reference to the implementation of the hard disk in FIG. 2, and the control device may be implemented with reference to the implementation of the host 300.

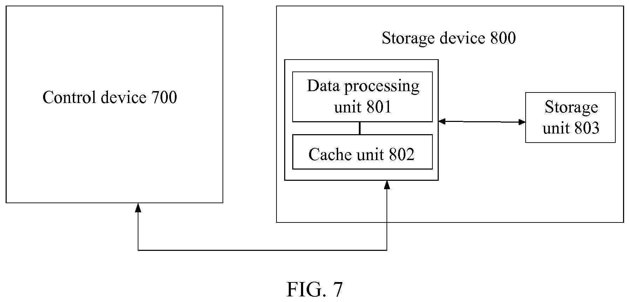

FIG. 7 is a schematic structural diagram of a data read/write command control system according to an embodiment of the present invention. The system includes a control device 700 and a storage device 800 in an NVMe over Fabric architecture. The storage device 800 includes a data processing unit 801, a cache unit 802, and a storage unit 803. Data that needs to be read/written by the control device is stored in the storage unit 803. The data processing unit 801 is configured to receive a data read/write command sent by the control device. The cache unit 802 is configured to cache data that needs to be transmitted according to the data read/write command.

The control device 700 is configured to send the data read/write command to the storage device 800.

The data processing unit 801 is configured to receive the data read/write command sent by the control device 700, and allocate a first storage space from an available storage space of the cache unit 802 according to a length, carried in the data read/write command, of the data that needs to be transmitted. A length of data that can be stored in the first storage space is a first length. The first storage space is less than a storage space of the cache unit 802. The first length is less than the length of the data that needs to be transmitted.

The data processing unit 801 is further configured to: sequentially obtain data of the first length, cache the data to the first storage space, and sequentially migrate the data cached in the first storage space to a storage space corresponding to a destination address of the data that needs to be transmitted according to the data read/write command.

According to an implementation provided by the foregoing system, because the first storage space allocated by the data processing unit 801 from the available storage space of the cache unit 802 is less than a storage space of the cache unit 802, and the first length is less than the length of the data that needs to be transmitted, the data of the first length may be sequentially migrated to the storage space corresponding to the destination address of the data that needs to be transmitted according to the data read/write command, so as to resolve a problem that a data read/write command fails to be executed because data that needs to be transmitted according to the data read/write command is greater than the storage space of the cache unit in the storage device.

The implementation of the system shown in FIG. 7 in this embodiment of the present invention may also be implemented with reference to the implementations shown in FIG. 2, FIG. 3, and FIG. 4. Details are not described herein. For example, the data processing unit 801 may be implemented with reference to the manner of the network adapter 401, the cache unit 802 may be implemented with reference to the implementation of the network adapter memory 4012, the storage unit 803 may be implemented with reference to the implementation of the hard disk in FIG. 2, and the control device 700 may be implemented with reference to the implementation of the host 300.

The methods or steps described in the disclosed content of the present invention may be implemented by hardware, or may be implemented by a processor executing a software instruction. The software instruction may include a corresponding software module. The software module may be stored in a random access memory (English: Random Access Memory, RAM), a flash memory, a read-only memory (English: Read Only Memory, ROM), an erasable programmable read-only memory (English: Erasable Programmable ROM, EPROM), an electrically erasable programmable read only memory (English: Electrically EPROM, EEPROM), a register, a hard disk, a removable hard disk, a compact disc read-only memory (English: CD-ROM), or a storage medium in any other form that is well known in the art. An example of the storage medium is coupled to the processor, so that the processor can read information from the storage medium and may write information into the storage medium. Certainly, the storage medium may also be a part of the processor. The processor and the storage medium may be located in an ASIC. In addition, the ASIC may be located in a core network interface device. Certainly, the processor and the storage medium may also be used as discrete components and exist in a core network interface device.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (English: ROM, Read-Only Memory), a random access memory (English: RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling a data read/write command between a control device and a storage device in a non-volatile memory express NVMe over Fabric, NVMe over Fabric, architecture, wherein the storage device comprises a data processing unit, a cache unit, and a storage unit; data that needs to be read/written by the control device is stored in the storage unit; the data processing unit is configured to receive a data read/write command sent by the control device; the cache unit is configured to cache data that needs to be transmitted according to the data read/write command; and the method comprises:
Receiving, by the data processing unit, the data read/write command sent by the control device, and allocating a first storage space from an available storage space of the cache unit according to a length, carried in the data read/write command, of the data that needs to be transmitted, wherein a length of data that can be stored in the first storage space is a first length, the first storage space is less than a storage space of the cache unit, and the first length is less than the length of the data that needs to be transmitted; and
sequentially obtaining, by the data processing unit, data of the first length, caching the data to the first storage space, and sequentially migrating the data cached in the first storage space to a storage space corresponding to a destination address of the data that needs to be transmitted according to the data read/write command.

2. The method according to claim 1, wherein:
the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

3. The method according to claim 1 or 2, wherein the data read/write command comprises address information of the data that needs to be transmitted and the length of the data that needs to be transmitted.

4. The method according to any one of claims 1 to 3, wherein:
the data read/write command is a write command; the data that needs to be transmitted is data that needs to be stored; and the write command comprises a source address, on the control device, of the data that needs to be stored, a length of the data that needs to be stored, and a destination address, on the storage unit, of the data that needs to be stored; and
correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command comprises:
step S1: obtaining, by the data processing unit from the control device, the data of the first length in the data that needs to be stored;
step S2: caching, by the data processing unit, the obtained data of the first length to the first storage space of the cache unit; and modifying the write command, wherein the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to the storage space corresponding to the destination address, on the storage unit, of the data that needs to be stored.

5. The method according to any one of claims 1 to 3, wherein:
the data read/write command is a read command; the data that needs to be transmitted is data that needs to be read; and the read command comprises a source address, on the storage unit, of the data that needs to be read, a length of the data that needs to be read, and a destination address, on the control device, of the data that needs to be read; and
correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command comprises:
step S1: modifying, by the data processing unit, the read command, wherein the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

6. The method according to any one of claims 1 to 5, wherein the data processing unit and the storage unit are connected by using an NVMe over Peripheral Component Interconnect Express PCIe, NVMe over PCIe, architecture.

7. The method according to any one of claims 1 to 6, wherein the data processing unit comprises a controller, the controller is configured to control transmission of the data cached in the cache unit from the cache unit to the storage unit, and the controller is a physical controller or a non-volatile storage controller in the NVMe over Fabric architecture.

8. A storage device, wherein the storage device is a storage device in a non-volatile memory express NVMe over Fabric, NVMe over Fabric, architecture; data is transmitted between the storage device and a control device in the NVMe over Fabric architecture; the storage device comprises a data processing unit, a cache unit, and a storage unit; data that needs to be read/written by the control device is stored in the storage unit; the data processing unit is configured to receive a data read/write command sent by the control device; the cache unit is configured to cache data that needs to be transmitted according to the data read/write command; the data processing unit comprises a processor; and the processor is configured to perform the following steps:
receiving the data read/write command sent by the control device, and allocating a first storage space from an available storage space of the cache unit according to a length, carried in the data read/write command, of the data that needs to be transmitted, wherein a length of data that can be stored in the first storage space is a first length, the first storage space is less than a storage space of the cache unit, and the first length is less than the length of the data that needs to be transmitted; and
sequentially obtaining data of the first length, caching the data to the first storage space, and sequentially migrating the data cached in the first storage space to a storage space corresponding to a destination address of the data that needs to be transmitted according to the data read/write command.

9. The storage device according to claim 8, wherein:
the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

10. The storage device according to claim 8 or 9, wherein the data read/write command comprises address information of the data that needs to be transmitted and the length of the data that needs to be transmitted.

11. The storage device according to any one of claims 8 to 10, wherein:
the data read/write command is a write command; the data that needs to be transmitted is data that needs to be stored; and the write command comprises a source address, on the control device, of the data that needs to be stored, a length of the data that needs to be stored, and a destination address, on the storage unit, of the data that needs to be stored;
correspondingly, the sequentially obtaining data of the first length, caching the data to the first storage space, and sequentially migrating the data cached in the first storage space to a storage space corresponding to a destination address of the data that needs to be transmitted according to the data read/write command comprises:
step S1: obtaining, by the data processing unit from the control device, the data of the first length in the data that needs to be stored;
step S2: caching, by the data processing unit, the obtained data of the first length to the first storage space of the cache unit; and modifying the write command, wherein the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to the storage space corresponding to the destination address, on the storage unit, of the data that needs to be stored.

12. The storage device according to any one of claims 8 to 10, wherein:
the data read/write command is a read command; the data that needs to be transmitted is data that needs to be read; and the read command comprises a source address, on the storage unit, of the data that needs to be read, a length of the data that needs to be read, and a destination address, on the control device, of the data that needs to be read; and
correspondingly, the sequentially obtaining data of the first length, caching the data to the first storage space, and sequentially migrating the data cached in the first storage space to a storage space corresponding to a destination address of the data that needs to be transmitted according to the data read/write command comprises:
step S1: modifying, by the data processing unit, the read command, wherein the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

13. The storage device according to any one of claims 8 to 12, wherein the data processing unit and the storage unit are connected by using an NVMe over Peripheral Component Interconnect Express PCIe, NVMe over PCIe, architecture.

14. The storage device according to any one of claims 8 to 13, wherein the data processing unit comprises a controller, the controller is configured to control transmission of the data cached in the cache unit from the cache unit to the storage unit, and the controller is a physical controller or a non-volatile storage controller in the NVMe over Fabric architecture.

15. A data read/write command control system, wherein the system comprises a control device and a storage device in a non-volatile memory express NVMe over Fabric, NVMe over Fabric, architecture; the storage device comprises a data processing unit, a cache unit, and a storage unit; data that needs to be read/written by the control device is stored in the storage unit; the data processing unit is configured to receive a data read/write command sent by the control device; and the cache unit is configured to cache data that needs to be transmitted according to the data read/write command, wherein:
the control device is configured to send the data read/write command to the storage device;
the data processing unit is configured to: receive the data read/write command sent by the control device, and allocate a first storage space from an available storage space of the cache unit according to a length, carried in the data read/write command, of the data that needs to be transmitted, wherein a length of data that can be stored in the first storage space is a first length, the first storage space is less than a storage space of the cache unit, and the first length is less than the length of the data that needs to be transmitted; and
the data processing unit is further configured to: sequentially obtain data of the first length, cache the data to the first storage space, and sequentially migrate the data cached in the first storage space to a storage space corresponding to a destination address of the data that needs to be transmitted according to the data read/write command.

16. The system according to claim 15, wherein:
the first storage space is less than or equal to an available storage space obtained when the data processing unit receives the data read/write command; or
the first storage space is a preset threshold; and when the first storage space is less than or equal to an available storage space obtained when the data processing unit receives the data read/write command, the data processing unit allocates the first storage space from the available storage space of the cache unit; or when the first storage space is greater than an available storage space obtained when the data processing unit receives the data read/write command, the data processing unit waits a preset time, then determines whether the first storage space is less than or equal to an available storage space of the cache unit, and when the first storage space is less than the available storage space of the cache unit, allocates the first storage space from the available storage space of the cache unit.

17. The system according to claim 15 or 16, wherein the data read/write command comprises address information of the data that needs to be transmitted and the length of the data that needs to be transmitted.

18. The system according to any one of claims 15 to 17, wherein:
the data read/write command is a write command; the data that needs to be transmitted is data that needs to be stored; and the write command comprises a source address, on the control device, of the data that needs to be stored, a length of the data that needs to be stored, and a destination address, on the storage unit, of the data that needs to be stored;
correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command comprises:
step S1: obtaining, by the data processing unit from the control device, the data of the first length in the data that needs to be stored;
step S2: caching, by the data processing unit, the obtained data of the first length to the first storage space of the cache unit; and modifying the write command, wherein the source address that is on the control device and in the write command and that is of the data that needs to be stored is modified to an address of the first storage space, and the length of the data that needs to be stored is modified to the first length;
step S3: sending, by the data processing unit, the modified write command to the storage unit; and
repeatedly performing steps S1 to S3 till the data that needs to be stored is migrated to the storage space corresponding to the destination address, on the storage unit, of the data that needs to be stored.

19. The system according to any one of claims 15 to 17, wherein:
the data read/write command is a read command; the data that needs to be transmitted is data that needs to be read; and the read command comprises a source address, on the storage unit, of the data that needs to be read, a length of the data that needs to be read, and a destination address, on the control device, of the data that needs to be read; and
correspondingly, the sequentially obtaining, by the data processing unit, data of the first length, caching the data to the first storage space, and sequentially migrating the data cached in the first storage space to a storage space corresponding to a destination address of the data that needs to be transmitted according to the data read/write command comprises:
step S1: modifying, by the data processing unit, the read command, wherein the destination address that is on the control device and in the read command and that is of the data that needs to be read is modified to an address of the first storage space, and the length of the data that needs to be read is modified to the first length; and sending the modified read command to the storage unit;
step S2: caching, by the data processing unit, the data of the first length to the first storage space, and sending the data in the first storage space to the control device; and
repeatedly performing steps S1 and S2 till the data that needs to be read is migrated to the storage space corresponding to the destination address, on the control device, of the data that needs to be read.

20. The system according to any one of claims 15 to 19, wherein the data processing unit and the storage unit are connected by using an NVMe over Peripheral Component Interconnect Express PCIe, NVMe over PCIe, architecture.

21. The system according to any one of claims 15 to 20, wherein the data processing unit comprises a controller, the controller is configured to control transmission of the data cached in the cache unit from the cache unit to the storage unit, and the controller is a physical controller or a non-volatile storage controller in the NVMe over Fabric architecture.
